# EUROPEAN PATENT SPECIFICATION

(11) **EP 1 748 958 B1**
(45) Date of publication and mention of the grant of the patent: **31.10.2007**
(21) Application number: 05743922.6
(22) Date of filing: 13.05.2005
(51) Int. Cl.: C02F 1/461, C25B 11/04

(54) **DIAMOND COATED ELECTRODE**
DIAMANTBESCHICHTETE ELEKTRODE
ELECTRODE REVETUE DE DIAMANT

(30) Priority: 21.05.2004 DE 102004025669
(43) Date of publication of application: 07.02.2007
(73) Proprietor: DIACCON GmbH, 90762 Fürth (DE)
(72) Inventor: RÜFFER, Martin, 92224 Amberg (DE); FORETA, Michael, 91126 Schwabach (DE)
(74) Representative: Gassner, Wolfgang
(86) International application number: PCT/EP2005/005253
(87) International publication number: WO 2005/113448

(56) References cited:
- EP-A- 0 949 205
- EP-A- 0 994 074
- WO-A-20/04005585
- FRYDA M ET AL: "Fabrication and application of Diachem<(>R) electrodes" DIAMOND AND RELATED MATERIALS, ELSEVIER SCIENCE PUBLISHERS, AMSTERDAM, NL, vol. 12, no. 10-11, October 2003 (2003-10), pages 1950-1956, XP004479890 ISSN: 0925-9635
- HUPERT M ET AL: "Conductive diamond thin-films in electrochemistry" DIAMOND AND RELATED MATERIALS, ELSEVIER SCIENCE PUBLISHERS, AMSTERDAM, NL, vol. 12, no. 10-11, October 2003 (2003-10), pages 1940-1949, XP004479889 ISSN: 0925-9635

## Description

The invention relates to an electrode comprising a substrate having at least at one of its sides a coating made of electroconductive diamond.

The DE 199 11 746 A1 describes a method for manufacturing of a diamond coated electrode. On a electroconductive substrate there is deposited a layer made of a diamond powder having an average grain size in the range of 5 nm to 100 nm. This diamond layer acts as a seed layer on which by chemical vapor deposition (CVD) a diamond layer having a grain size usually in the range of 1 to 50 µm is deposited.

From DE 694 10 576 T2 it is known to use such a diamond coated electrode for the treatment of waste water. However, in practise it has turned out that the corrosion resistance of such an electrode is not very high. This may end up in a separation of the diamond layer from the substrate.

It is an object of the present invention to avoid the disadvantages in the art. It is an aim of the invention to provide a diamond coated electrode having an improved resistance against corrosion.

This object is solved by the features of claim 1. Embodiments of the invention are described by the features of claims 2 to 21.

According to the present invention there is provided an electrode comprising a substrate having at least at one of its sides a coating made of an electroconductive diamond, the coating comprising at least one first diamond layer having a first average grain diameter and at least one second diamond layer having a second average grain diameter, the first average grain diameter being bigger than the second average grain diameter, and the second layer overlying the first layer.

The proposed electrode shows an excellent resistance against corrosion. By depositing upon the first diamond layer a second diamond layer having a smaller average grain size it is possible to effectively prevent a liquid from seeping into the coating. The second diamond layer forms an effective seal which can advantageously be produced simply by varying one or more parameters during chemical vapor deposition. The first layer may have a fine grained base layer which is followed by coarser grains. The coarse grains may have a columnar structure.

According to an embodiment of the invention the first average grain diameter is in the range of 0.5 µm to 25 µm. The second average grain diameter is advantageously less than 1.0 µm, preferably in the range of 50 to 200 nm. A second diamond layer having the aforementioned second average grain diameter effectively protects an underlying first diamond layer against the penetration of liquids.

According to a further embodiment a thickness of the second diamond layer is smaller than a thickness of the first diamond layer. It has turned out to be advantageous that a ratio of the thickness of the second diamond layer to the first diamond layer is in the range of 0.05 to 0.99. For an effective sealing against corrosion it is sufficient to deposit the second diamond layer with a relatively small thickness. As a result of this the cost for providing an effective protection against corrosion can be kept low.

According to a further embodiment the first and second diamond layers form an alternating sequence. By this feature the resistance against corrosion can be enhanced further. It can be provided in particular an excellent resistance against corrosion caused by electrochemical attack. The overall thickness of the alternating sequence may be in the range of 1 to 200 µm. Preferably the thickness of the alternating sequence is in the range of 2 to 25 µm.

An uppermost diamond layer forming an outer surface of the electrode is advantageously the second diamond layer. Thereby the number of the layers can be minimised and at the same time a good protection against corrosion can be achieved.

According to a further embodiment the diamond contains a doping for increasing its electrical conductivity. The doping may comprise at least one of the following substances: boron, nitrogen. An amount of the doping contained in the diamond may be in the range of 10 ppm to 3000 ppm, preferably in the range of 100 ppm to 1000 ppm. The proposed doping is suitable to provide an excellent electrical conductivity of the diamond coating.

A first average amount of the doping contained in the first diamond layer may differ from a second average amount of the doping contained in the second diamond layer. In particular the first average amount is lower than the second average amount. Furthermore an third average amount of the doping contained in the uppermost diamond layer can be higher than the average amount of the diamond layers being provided between the uppermost diamond layer and the substrate. By the aforementioned features the electrical properties of the electrode, in particular the electrical conductivity of the diamond coating can be improved. The diamond and/or the substrate may have an electrical resistance of less than 100 Ωcm, preferably of less than 0.1 Ωcm.

According to a further embodiment at least 30 % by volume, preferably 50 % per area unit on the surface, of the diamond crystals of the uppermost diamond layer are twins. By this feature the electromechanical resistance of the diamond coating can be enhanced. The growth of twins can be simply achieved during chemical vapor deposition by choosing suitable parameters, e. g. an increase of the temperature. Furthermore the uppermost diamond layer may have a hydrophobic or a hydrophilic surface. A hydrophilic surface can be made by an annealing the deposited diamond coating in an oxygen atmosphere. A hydrophobic surface of the uppermost diamond layer can be made by an annealing the diamond coating in an atmosphere containing hydrogen and/or methane.

It has been turned out to be advantageous if the substrate is made of a metal, preferably a self passivating metal. Under the term "self passivating metal" there is understood a metal which is passivated on its surface by the formation of an isolating layer by chemical or electrochemical oxidation. The metal may be selected from the following metals: titanium, niobium, tantalum, aluminium, zirconium, steel, steel being coated with a layer which separates the iron of the steel from the atmosphere used in the CVD-process and forms covalent bonds to the diamond layer. Suitable layers are for example made of titanium boron nitride or chromium carbide. The substrate has advantageously a thickness in the range of 0.1 to 20.0 mm.

According to an advantageous embodiment of the invention the diamond coating is provided on the opposite sites of the substrate. Thereby the effectiveness of the electrode can be enhanced remarkably. The substrate may have an angular, preferably a rectangular, form which makes it easy to manufacture for example a large-dimension flat electrode. However, it is also possible that the substrate has a curved surface. It may be a tube, slab, rod or plate. Furthermore, the substrate may be an expanded metal. It may have one or more apertures.

Embodiments of the invention are now described by way of nonlimiting examples with references to the accompanying drawings in which:
- Fig. 1: is a schematic sectional view of an electrode,
- Fig. 2: is a SEM photo of a transverse section of an electrode,
- Fig. 3: is a first 3-dimensional plot of the surface of a first diamond-layer and
- Fig. 4: is a second 3-dimensional plot of a second diamond-layer.

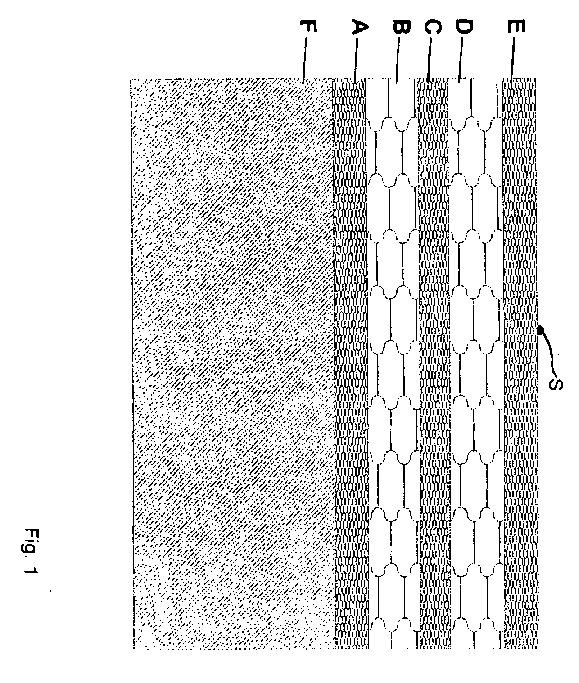

Fig. 1 a seed layer A made of a nanocristalline diamond powder is deposited upon a substrate F. The substrate F is made preferably of titanium or steel coated with a layer made of titanium boron nitrite or chromium carbide. Such a layer separates the iron of the steel from the atmosphere used in the CVD-process and forms covalent bonds to the diamond layer.

The seed layer A is overlaid by a first diamond layer B, the thickness of which may be in the range 0.5 to 25 µm. A first average grain diameter in the direction of growth is preferably bigger than 0.5 µm. The direction of growth is essentially perpendicular to the surface of the substrate F.

A second diamond layer C overlays the first diamond layer B. The thickness of the second diamond layer C is preferably smaller than the thickness of the first diamond layer B. A second average grain diameter is preferably smaller than 0.5 µm in the direction of growth.

As can be seen from Fig. 1 the second diamond layer C is overlaid by a further first diamond layer D. The further first diamond layer D is overlaid by a further second diamond layer E which forms an uppermost diamond layer.

Compared with the second diamond layer C the further second diamond layer E may exhibit some special features. In order to enhance the electromechanical resistance of the uppermost diamond layer E it may contain a considerable amount of diamond twins. The amount may be 30 to 60 % or more per area unit on the surface. Furthermore the uppermost diamond layer E may contain a higher amount of a doping, preferably boron, than the first B, D and second diamond layers C. Finally, a surface S of the uppermost diamond layer E may have hydrophobic or hydrophilic properties.

A change in the grain size of the first B, D and the second diamond layers C, E can be made by changing the content of methane in the atmosphere and/or by varying the temperature during CVD-process. A low content of methane in the atmosphere and/or a high temperature leads to the deposition of grains with a large grain diameter whereas a high content of methane and/or a low temperature leads to the deposition of a small grain diameter. The high temperature may be a substrate temperature in the range of 850°C, the low temperature may be a substrate temperature in the range of 750°C. The first diamond layers B, D usually contain an amount of boron smaller than 1000 ppm. The second diamond layers C, E typically contain an amount of boron of more than 500 ppm.

Furthermore, by choosing suitable parameters during CVD-process it is possible to produce diamond grains having a texture with respect to the fastest growth direction. The first diamond layer can preferably contain diamond grains which have a texture in [100]- or [110]- or [111]-direction. First diamond layers B, D exhibiting a texture have an improved mechanical strength and an improved resistance against corrosion.

The following tables show by way of example suitable deposition parameters for the first B, D and the second diamond-layers C, E.

**Table 1 Deposition parameter for the first diamond layer B, D (coarse grain size)**

| Deposition parameter | Value |
|---|---|
| gas flow | 1010 sccm |
| hydrogen content H₂ | 99 % |
| methane content CH₄ | 1 % |
| boron content (CH₃)₃BO₃ | 0,01 % |
| pressure | 7 mbar |
| substrate surface temperature | 800 °C |
| filament temperature | 1950 °C |
| distance filament - substrate | 20 mm |
| deposition time | 20 h |
| layer thickness | ca. 1,2 µm |
| graine size | up to ca. 1,2 µm length |
| | up to ca. 400 nm width |

**Table 2. Deposition parameter for the second diamond layer C, E (fine grain size)**

| Deposition parameter | Value |
|---|---|
| gas flow | 1010 sccm |
| hydrogen content H₂ | 98 % |
| methane content CH₄ | 2 % |
| boron content (CH₃)₃BO₃ | 0,01 % |
| pressure | 7 mbar |
| substrate surface temperature | 800 °C |
| filament temperature | 1950 °C |
| distance filament - substrate | 20 mm |
| deposition time | 20 h |
| layer thickness | ca. 1,8 µm |
| graine size | maximum < 200 nm |

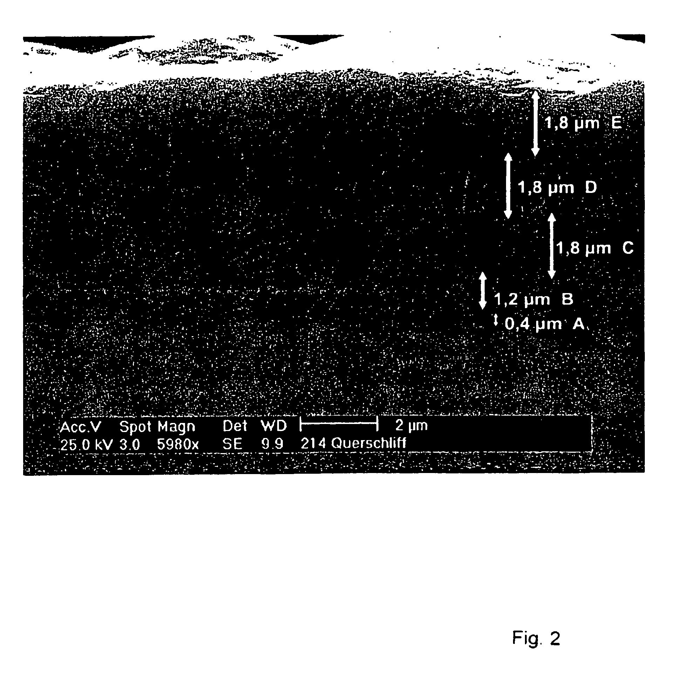

Fig. 2 shows a SEM-photo of an electrode which is similar to the electrode shown schematically in Fig. 1. As can be seen from Fig. 2 the seed layer A has a thickness of about 0.4 µm. The thickness of the first diamond layer is in the range of 1.2 µm. The second diamond layer C and the further second diamond layer E have a thickness of about 1.8 µm. The further first diamond layer which is sandwiched between the second diamond layer E and the further second diamond layer E has also a thickness of about 1.8 µm.

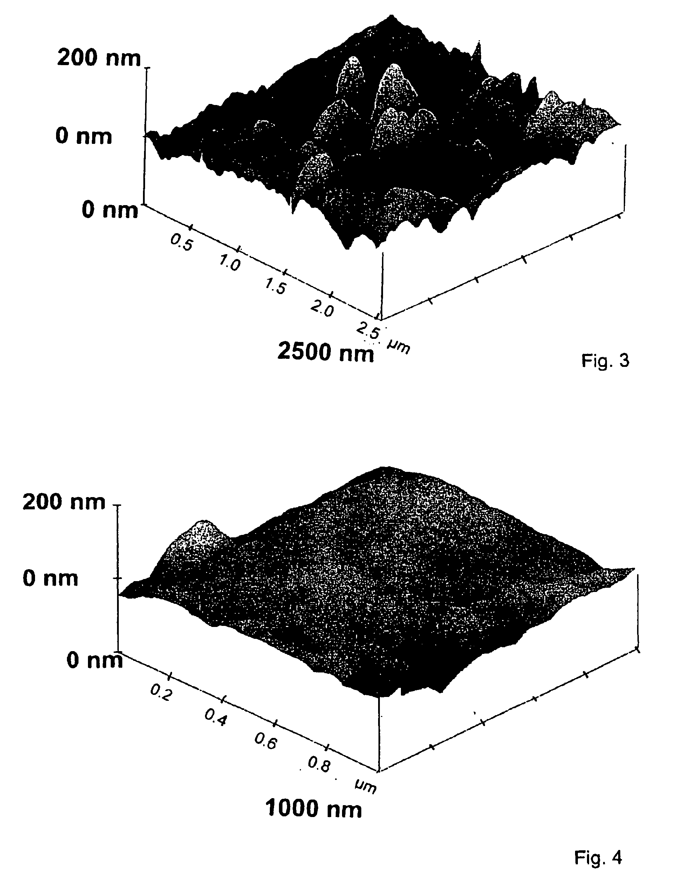

Fig. 3 and 4 show 3-dimensional plots of the surface of the first diamond layer B and the second diamond layer C. The plots have been calculated on basis of data which have been obtained by the record of a picture via atomic force microscopy (AFM). As can be seen from Fig. 3 the first diamond layer has a surface roughness in the range of 200 nm.

As can be seen from Fig. 4 the second diamond layer C has a remarkably smoother surface with a roughness in the range of about 50 nm.

By providing a fine grained second diamond layer C or a further second diamond layer E an underlying first diamond layer B or a further first diamond layer D can be effectively protected against a penetration of a liquid. The corrosion resistance of the proposed electrode is enhanced remarkably.

As shown in Fig. 1 and 2 an alternating sequence of first B, D and second diamond layers C, E can be used. The provision of such an alternating sequence further enhances the resistance of the electrode against corrosion.

### Reference list

- A: seed layer
- B: first diamond layer
- C: second diamond layer
- D: further first diamond layer
- E: further second diamond layer or uppermost layer
- F: substrate
- S: surface

## Claims

1. Electrode comprising a substrate (F) having at least at one of its sides a coating made of an electroconductive diamond,
the coating comprising at least one first diamond layer (B, D) having a first average grain diameter and at least one second diamond layer (C, E) having a second average grain diameter,
the first average grain diameter being bigger than the second average grain diameter, and
the second diamond layer (C, E) overlying the first diamond layer (B, D).

2. Electrode according to claim 1, wherein the first average grain diameter is in the range of 0.5 µm to 25 µm.

3. Electrode according to one of the preceding claims, wherein the second average grain diameter is less than 1.0 µm, preferably in the range of 50 to 200nm.

4. Electrode according to one of the preceding claims, wherein a thickness of the second diamond layer (C, E) is smaller than a thickness of the first diamond layer (B, D).

5. Electrode according to one of the preceding claims, wherein a ratio of the thickness of the second diamond layer (C, E) to the first diamond layer (B, D) is in the range of 0.05 to 0.99.

6. Electrode according to one of the preceding claims, wherein the first (B, D) and second diamond layers (C, E) form an alternating sequence.

7. Electrode according to one of the preceding claims, wherein the overall thickness of the alternating sequence is in the range of 1 to 200 µm.

8. Electrode according to one of the preceding claims, wherein an uppermost diamond layer (E) forming an outer surface (S) of the electrode is the second diamond layer.

9. Electrode according to one of the preceding claims, wherein the diamond contains a doping for increasing its electrical conductivity.

10. Electrode according to one of the preceding claims, wherein the doping comprises at least one of the following substances: boron, nitrogen.

11. Electrode according to one of the preceding claims, wherein the amount of the doping contained in the diamond is in the range of 10 ppm to 3000 ppm, preferably in the range of 100 ppm to 1000 ppm.

12. Electrode according to one of the preceding claims, wherein a first average amount of the doping contained in the first diamond layer (B, D) differs from a second average amount of the doping contained in the second diamond layer (C, E).

13. Electrode according to one of the preceding claims, wherein the first average amount of the doping is lower than the second average amount of the doping.

14. Electrode according to one of the preceding claims, wherein a third average amount of the doping contained in the uppermost diamond layer (E) is higher than the average amounts of the diamond layers (B, C, D) being provided between the uppermost diamond layer (E) and the substrate (F).

15. Electrode according to one of the preceding claims, wherein the diamond and/or the substrates has/have an electrical resistance of less than 100 Ωcm, preferably of less than 0.1 Ωcm.

16. Electrode according to one of the preceding claims, wherein at least 30% by volume, preferably at least 50% per area unit on the surface, of the diamond crystals of the uppermost diamond (E) layer are twins.

17. Electrode according to one of the preceding claims, wherein the uppermost diamond layer (E) has a hydrophobic or a hydrophilic surface.

18. Electrode according to one of the preceding claims, wherein the substrate (F) is made of a metal, preferably a self passivating metal.

19. Electrode according to one of the preceding claims, wherein the metal is selected from the following metals: titanium, niobium, tantalum, aluminium, zirconium, steel, steel coated with a layer made of titanium boron nitride or chromium carbide.

20. Electrode according to one of the preceding claims, wherein the substrate (F) has a thickness in the range of 0.1 to 20.0 mm.

21. Electrode according to one of the preceding claims, wherein the substrate (F) is coated on its opposite sides with the electroconductive diamond.

## Patentansprüche

1. Elektrode, umfassend ein Substrat (F), das mindestens auf einer seiner Seiten einen Überzug hat, der aus elektrisch leitendem Diamant hergestellt ist,
wobei der Überzug mindestens eine erste Diamantschicht (B, D) mit einem ersten mittleren Korndurchmesser und mindestens eine zweite Diamantschicht (C, E) mit einem zweiten mittleren Korndurchmesser umfasst,
wobei der erste mittlere Korndurchmesser größer als der zweite mittlere Korndurchmesser ist, und
die zweite Diamantschicht (C, E) auf der ersten Diamantschicht (B, D) liegt.

2. Elektrode nach Anspruch 1, wobei der erste mittlere Korndurchmesser im Bereich von 0,5 µm bis 25 µm liegt.

3. Elektrode nach einem der vorangehenden Ansprüche, wobei der zweite mittlere Korndurchmesser bei weniger als 1,0 µm, vorzugsweise im Bereich von 50 bis 200 nm, liegt.

4. Elektrode nach einem der vorangehenden Ansprüche, wobei eine Stärke der zweiten Diamantschicht (C, E) geringer als eine Stärke der ersten Diamantschicht (B, D) ist.

5. Elektrode nach einem der vorangehenden Ansprüche, wobei ein Verhältnis der Stärke der zweiten Diamantschicht (C, E) zu der ersten Diamantschicht (B, D) im Bereich von 0,05 bis 0,99 liegt.

6. Elektrode nach einem der vorangehenden Ansprüche, wobei die erste (B, D) und die zweite Diamantschicht (C, E) eine alternierende Abfolge bilden.

7. Elektrode nach einem der vorangehenden Ansprüche, wobei die Gesamtstärke der alternierenden Abfolge im Bereich von 1 bis 200 µm liegt.

8. Elektrode nach einem der vorangehenden Ansprüche, wobei eine oberste Diamantschicht (E), die eine Außenfläche (S) der Elektrode bildet, die zweite Diamantschicht ist.

9. Elektrode nach einem der vorangehenden Ansprüche, wobei der Diamant einen Dotierstoff zur Erhöhung seiner spezifischen elektrischen Leitfähigkeit enthält.

10. Elektrode nach einem der vorangehenden Ansprüche, wobei der Dotierstoff mindestens eine der folgenden Substanzen umfasst: Bor, Stickstoff.

11. Elektrode nach einem der vorangehenden Ansprüche, wobei die Menge des in dem Diamanten enthaltenen Dotierstoffs im Bereich von 10 ppm bis 3000 ppm, vorzugsweise im Bereich von 100 ppm bis 1000 ppm, liegt.

12. Elektrode nach einem der vorangehenden Ansprüche, wobei eine erste mittlere Menge des in der ersten Diamantschicht (B, D) enthaltenen Dotierstoffs von einer zweiten mittleren Menge des in der zweiten Diamantschicht (C, E) enthaltenen Dotierstoffs verschieden ist.

13. Elektrode nach einem der vorangehenden Ansprüche, wobei die erste mittlere Menge des Dotierstoffs geringer als die zweite mittlere Menge des Dotierstoffs ist.

14. Elektrode nach einem der vorangehenden Ansprüche, wobei eine dritte mittlere Menge des in der obersten Diamantschicht (E) enthaltenen Dotierstoffs höher ist als die mittleren Mengen der Diamantschichten (B, C, D), die zwischen der obersten Diamantschicht (E) und dem Substrat (F) vorgesehen sind.

15. Elektrode nach einem der vorangehenden Ansprüche, wobei der Diamant und/oder die Substrate einen elektrischen Widerstand von weniger als 100 Ωcm, vorzugsweise von weniger als 0,1 Ωcm, hat/haben.

16. Elektrode nach einem der vorangehenden Ansprüche, wobei mindestens 30 Vol.%, vorzugsweise mindestens 50% pro Flächeneinheit auf der Oberfläche, der Diamantkristalle der obersten Diamantschicht (E) Zwillinge sind.

17. Elektrode nach einem der vorangehenden Ansprüche, wobei die oberste Diamantschicht (E) eine hydrophobe oder eine hydrophile Oberfläche hat.

18. Elektrode nach einem der vorangehenden Ansprüche, wobei das Substrat (F) aus einem Metall, vorzugsweise aus einem selbstpassivierenden Metall, hergestellt ist.

19. Elektrode nach einem der vorangehenden Ansprüche, wobei das Metall aus den folgenden Metallen ausgewählt ist: Titan, Niob, Tantal, Aluminium, Zirkon, Stahl, Stahl mit einem Überzug aus Titanbornitrid oder Chromkarbid.

20. Elektrode nach einem der vorangehenden Ansprüche, wobei das Substrat (F) eine Stärke im Bereich von 0,1 bis 20,0 mm hat.

21. Elektrode nach einem der vorangehenden Ansprüche, wobei das Substrat (F) auf seinen gegenüberliegenden Seiten mit dem elektrisch leitenden Diamanten beschichtet ist.

## Revendications

1. Electrode comprenant un substrat (F) ayant au moins sur un de ses côtés un revêtement constitué d'un diamant conducteur de l'électricité,
le revêtement comprenant au moins une première couche de diamant (B, D) ayant un premier diamètre de grain moyen, et au moins une deuxième couche de diamant (C, E) ayant un deuxième diamètre de grain moyen,
le premier diamètre de grain moyen étant plus grand que le deuxième diamètre de grain moyen, et
la deuxième couche de diamant (C, E) recouvrant la première couche de diamant (B, D).

2. Electrode selon la revendication 1, où le premier diamètre de grain moyen s'inscrit dans la plage de 0,5 µm à 25 µm.

3. Electrode selon une des revendications précédentes, où le deuxième diamètre de grain moyen est inférieur à 1,0 µm, de préférence dans la plage de 50 à 200 nm.

4. Electrode selon une des revendications précédentes, où une épaisseur de la deuxième couche de diamant (C, E) est plus petite qu'une épaisseur de la première couche de diamant (B, D).

5. Electrode selon une des revendications précédentes, où un rapport de l'épaisseur de la deuxième couche de diamant (C, E) à la première couche de diamant (B, D) s'inscrit dans la plage de 0,05 à 0,99.

6. Electrode selon une des revendications précédentes, où la première (B, D) et la deuxième couche de diamant (C, E) forment une séquence alternée.

7. Electrode selon une des revendications précédentes, où l'épaisseur totale de la séquence alternée s'inscrit dans la plage de 1 à 200 µm.

8. Electrode selon une des revendications précédentes, où une couche de diamant supérieure (E) formant une surface extérieure de l'électrode est la deuxième couche de diamant.

9. Electrode selon une des revendications précédentes, où le diamant contient un dopage pour augmenter sa conductivité électrique.

10. Electrode selon une des revendications précédentes, où le dopage comprend au moins une des substances suivantes: bore, azote.

11. Electrode selon une des revendications précédentes, où la quantité du dopage contenu dans le diamant s'inscrit dans la plage de 10 ppm à 3 000 ppm, de préférence dans la plage de 100 ppm à 1 000 ppm.

12. Electrode selon une des revendications précédentes, où une première quantité moyenne du dopage contenu dans la première couche de diamant (B, D) diffère d'une deuxième quantité moyenne du dopage contenu dans la deuxième couche de diamant (C, E).

13. Electrode selon une des revendications précédentes, où la première quantité moyenne du dopage est inférieure à la deuxième quantité moyenne du dopage.

14. Electrode selon une des revendications précédentes, où une troisième quantité moyenne du dopage contenu dans la couche de diamant supérieure (E) est plus élevée que les quantités moyennes des couches de diamant (B, C, D) qui sont prévues entre la couche de diamant supérieure (E) et le substrat (F).

15. Electrode selon une des revendications précédentes, où le diamant et/ou les substrats a/ont une résistance électrique inférieure à 100 Ωcm, de préférence inférieure à 0,1 Ωcm.

16. Electrode selon une des revendications précédentes, où au moins 30 % en volume, de préférence au moins 50 % en unité d'aire sur la surface, des cristaux de diamant de la couche de diamant supérieure (E) sont des macles.

17. Electrode selon une des revendications précédentes, où la couche de diamant supérieure (E) a une surface hydrophobe ou hydrophile.

18. Electrode selon une des revendications précédentes, où le substrat (F) est constitué de métal, de préférence d'un métal d'auto-passivation.

19. Electrode selon une des revendications précédentes, où le métal est sélectionné parmi les métaux suivants : titane, niobium, tantale, aluminium, zircone, acier, acier revêtu d'une couche constituée de nitrure de titane bore ou de carbure de chrome.

20. Electrode selon une des revendications précédentes, où le substrat (F) a une épaisseur dans la plage de 0,1 à 20,0 mm.

21. Electrode selon une des revendications précédentes, où le substrat (F) est revêtu, sur ses côtés opposés, du diamant conducteur de l'électricité.
